# DEMANDE DE BREVET EUROPEEN

(11) **EP 2 777 961 A1**
(43) Date de publication de la demande: **17.09.2014**
(21) Numéro de dépôt: 14159262.6
(22) Date de dépôt: 12.03.2014
(51) Int. Cl.: B60F 3/00, A61G 5/00

(54) **Véhicule amphibie de type cycle pour le transport d'au moins une personne à mobilité réduite**

(30) Priorité: 13.03.2013 FR 1352228
(71) Demandeur: Allheilly, Jean-François, 03600 Commentry (FR)
(72) Inventeur: Allheilly, Jean-François, 03600 Commentry (FR)
(74) Mandataire: Blot, Philippe Robert Emile

(57) **Abrégé**

Véhicule (1) de type cycle pour le transport d'au moins une personne à mobilité réduite selon une direction de mouvement (L), comprenant : un châssis (7) ; au moins un fauteuil (9) ou une selle monté(e) sur le châssis ; au moins deux roues principales (11, 13) ; et au moins deux supports de roue (15, 17) montés sur le châssis (7).

Le véhicule est mobile sélectivement entre une configuration terrestre, dans laquelle chaque support de roue occupe une première position relativement au châssis destinée à permettre aux roues principales de rouler sur le sol (3), et une configuration aquatique, dans laquelle le véhicule chargé de la personne à mobilité réduite est destiné à flotter sur un plan d'eau (5) et dans laquelle chaque support de roue occupe une seconde position, les roues principales étant plus écartées l'une de l'autre dans la configuration aquatique que dans la configuration terrestre, et les roues principales étant destinées à être situées plus haut par rapport au châssis dans la configuration aquatique que dans la configuration terrestre.

Le véhicule présente une masse volumique et un volume tels qu'il est capable de flotter sur le plan d'eau en transportant une personne à mobilité réduite ayant une masse inférieure à 120 kg. Les roues principales ont une masse volumique inférieure à celle de l'eau, au moins dans la configuration aquatique.

## Description

La présente invention concerne un véhicule de type cycle pour le transport d'au moins une personne à mobilité réduite, le véhicule étant destiné à être poussé ou tiré selon une direction de mouvement, le véhicule comprenant :
- un châssis ;
- au moins un fauteuil ou une selle monté(e) sur le châssis et sur lequel ou laquelle la personne à mobilité réduite est destinée à s'asseoir ;
- au moins deux roues principales ; et
- au moins deux supports de roue montés sur le châssis, les roues principales étant montées rotatives respectivement sur l'un et l'autre des deux supports de roue.

On connaît dans l'art antérieur des véhicules de type cycle, par exemple des poussettes ou des fauteuils roulants, destinés à rouler sur le sol.

De tels véhicules ne sont pas conçus pour une utilisation aquatique. Ils ne sont en général pas flottants ou capable de flotter lorsque la personne à mobilité réduite est assise dans le fauteuil.

On connaît aussi un fauteuil de baignade se présentant comme un fauteuil roulant à trois roues, comportant en outre une fourche faisant saillie du fauteuil roulant vers l'avant et sur laquelle est montée une roue large, par exemple de largeur supérieure à 80 mm. En outre, il est prévu que les roues arrière du fauteuil de baignade, c'est-à-dire les roues principales du fauteuil roulant, soient éventuellement remplacées par des roues plus larges, adaptées aux terrains lourds. Néanmoins, le fauteuil n'est pas très stable lors d'une utilisation dans l'eau.

Un but de l'invention est de fournir un véhicule de type cycle adapté à une utilisation amphibie, et en particulier dont la stabilité lors d'une utilisation aquatique soit améliorée.

A cet effet, l'invention a pour objet un véhicule du type décrit ci-dessus, le véhicule étant mobile sélectivement entre une configuration terrestre, dans laquelle chaque support de roue occupe une première position relativement au châssis destinée à permettre aux roues principales de rouler sur le sol, et une configuration aquatique, dans laquelle le véhicule chargé de la personne à mobilité réduite est destiné à flotter sur un plan d'eau et dans laquelle chaque support de roue occupe une seconde position relativement au châssis, les roues principales étant plus écartées l'une de l'autre dans la configuration aquatique que dans la configuration terrestre, et les roues principales étant destinées à être situées plus haut par rapport au châssis dans la configuration aquatique que dans la configuration terrestre ; le véhicule présentant une masse volumique et un volume tels que le véhicule est capable de flotter sur le plan d'eau en transportant la personne à mobilité réduite, la personne à mobilité réduite ayant une masse inférieure à 120 kg ; et les roues principales ayant une masse volumique inférieure à celle de l'eau, au moins dans la configuration aquatique du véhicule.

Selon des modes particuliers de réalisation, le véhicule peut comprendre l'une ou plusieurs des caractéristiques suivantes, prise(s) isolément ou selon toutes les combinaisons techniquement possibles :
- dans la configuration terrestre, chaque roue principale est mobile en rotation autour d'un axe formant un angle inférieur ou égal à 15° avec une direction transversale du véhicule sensiblement perpendiculaire à la direction de mouvement et sensiblement horizontale lorsque le sol est horizontal ;
- dans la configuration aquatique, l'axe de chacune des roues principales forme un angle inférieur ou égal à 20° avec une direction d'élévation du véhicule sensiblement perpendiculaire à la direction de mouvement et sensiblement perpendiculaire à la direction transversale ;
- la seconde position de chaque support de roue se déduit de la première position par une rotation du support de roue par rapport au châssis respectivement autour d'un axe de pivotement ;
- le véhicule comprend des dispositifs de montage des supports de roue à rotation sur le châssis respectivement autour des axes de pivotement, des dispositifs de blocage pour bloquer les supports de roue dans la première position, lesdits dispositifs de blocage étant propres à s'opposer à une rotation des supports de roue dans les deux sens autour des axes de pivotement, et des dispositifs de blocage pour bloquer les supports de roue dans la seconde position, lesdits dispositifs de blocage étant propres à s'opposer à une rotation des supports de roue autour des axes de pivotement dans au moins un sens ;
- les dispositifs de montage et les dispositifs de blocage dans la première position comprennent un écrou et une vis à poignée ;
- les dispositifs de blocage dans la seconde position comprennent un écrou et une vis à poignée ;
- les dispositifs de blocage dans la seconde position comprennent une butée solidaire du châssis ;
- le véhicule comprend des flotteurs fixes reçus dans des logements du châssis ;
- le véhicule comprend au moins un flotteur mobile monté mobile sur le châssis entre une position repliée par rapport au châssis, destinée à être occupée lorsque le véhicule est dans la configuration terrestre, et une position dépliée par rapport au châssis, destinée à être occupée lorsque le véhicule est dans la configuration aquatique ;
- le véhicule comprend au moins une roue folle montée pivotante autour d'un axe de pivotement ; et un dispositif de blocage pour bloquer sélectivement le pivotement de la roue folle autour de l'axe de pivotement dans une position de blocage dans laquelle la roue folle s'étend sensiblement dans un plan parallèle à la direction de mouvement, la roue folle étant destinée à être bloquée dans la position de blocage lorsque le véhicule est dans la configuration aquatique ;
- les axes de pivotement des supports de roue sont sensiblement parallèles à la direction de mouvement ;
- les dispositifs de fixation des supports de roue à rotation sur le châssis sont amovibles ;
- le flotteur mobile est destiné à passer de la position repliée à la position dépliée sous l'action de l'eau lorsque le véhicule entre dans le plan d'eau.

L'invention sera mieux comprise à la lecture de la description qui va suivre, donnée uniquement à titre d'exemple, et faite en se référant aux dessins annexés, sur lesquels :
- la Figure 1 est une vue schématique, en perspective, d'un véhicule selon l'invention, le véhicule étant dans la configuration terrestre,
- la Figure 2 est une vue schématique, en perspective, du véhicule représenté sur la Figure 1, le véhicule étant dans la configuration aquatique,
- la Figure 3 est une vue schématique, en perspective, du véhicule représenté sur les Figures 1 et 2, le véhicule étant dans une configuration aquatique constituant une variante de la configuration aquatique représentée sur la Figure 2.

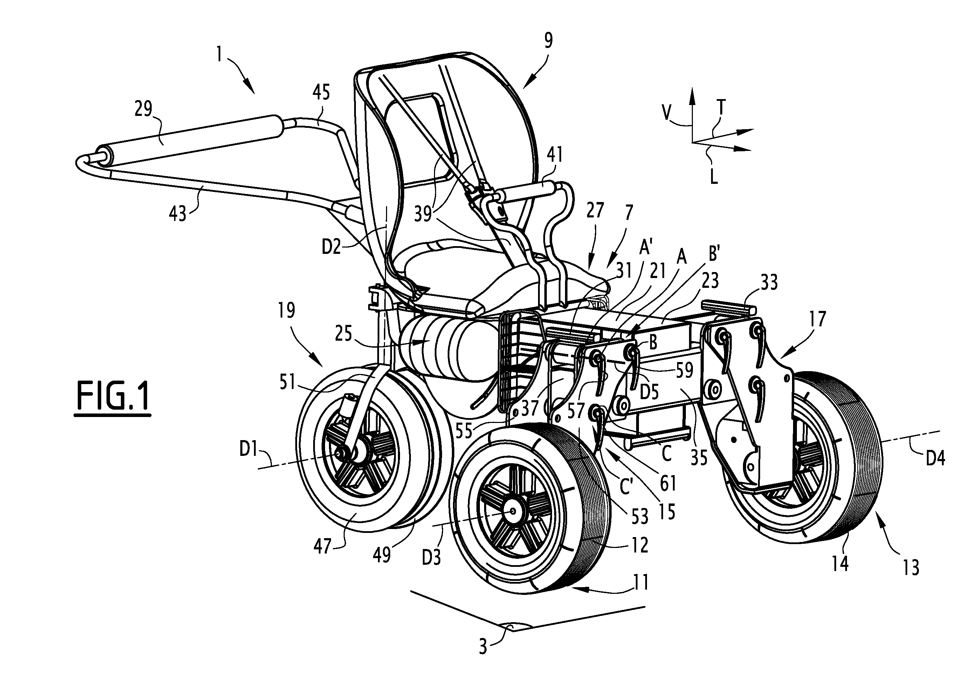

En référence à la Figure 1, on décrit un véhicule 1 du type cycle propre à transporter au moins une personne à mobilité réduite (non représentée).

Par « véhicule de type cycle », on entend un véhicule destiné à être équipé de roues de type cycle.

Dans l'exemple représenté, le véhicule 1 est une poussette. Selon d'autres modes de réalisation (non représentés), le véhicule 1 est un fauteuil roulant, ou une carriole équipée d'au moins un fauteuil ou d'une selle.

Par « roue de cycle » ou « roue de type cycle », on entend dans tout le présent document, une roue comprenant une jante profilée adaptée pour recevoir un pneumatique. La jante est par exemple connectée à un moyeu central de rotation par des rayons et/ou des éléments de connexion de section non circulaire (non représentés).

En général, une telle roue ne nécessite pas une opération d'équilibrage avant sa première utilisation ou après un remplacement du pneumatique.

De préférence, une telle roue est dimensionnée pour supporter une charge maximale inférieure ou égale à 150 kg, par exemple inférieure à 80 kg.

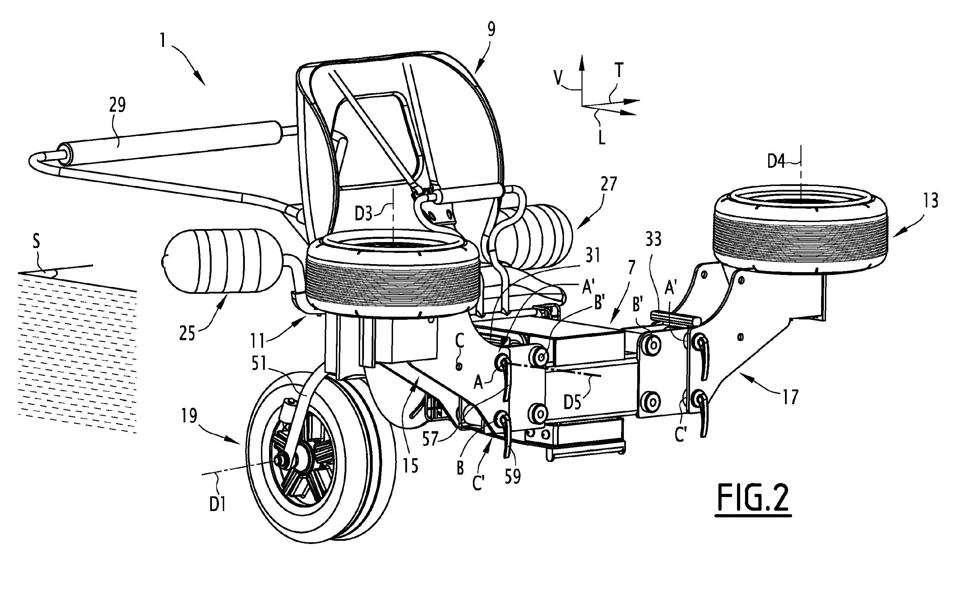

Le véhicule 1 est amphibie, c'est-à-dire susceptible d'être utilisé sur un sol 3 dans une configuration terrestre représentée sur la Figure 1, et sur un plan d'eau 5 dans une configuration aquatique représenté sur la Figure 2.

Le véhicule 1 est destiné à être poussé selon une direction de mouvement L. On définit en outre une direction transversale T du véhicule 1 sensiblement perpendiculaire à la direction de mouvement L et sensiblement horizontale lorsque le sol 3 est horizontal. On définit enfin une direction d'élévation V du véhicule 1 sensiblement perpendiculaire à la direction de mouvement L et sensiblement perpendiculaire à la direction transversale T. La direction d'élévation V est sensiblement verticale lorsque le sol 3 est horizontal.

Les termes « avant », « arrière » s'entendent par rapport au sens de mouvement naturel du véhicule 1.

Le véhicule 1 possède par exemple, sans la personne à mobilité réduite, une masse comprise entre 10 et 70 kg, avantageusement entre 20 et 30 kg.

Le véhicule 1 présente une masse volumique et un volume tels que le véhicule 1 est capable de flotter sur l'eau en transportant la personne à mobilité réduite, par exemple tant que la personne à mobilité réduite présente une masse inférieure à 120 kg.

En variante (non représentée), le véhicule 1 est propre à transporter au moins une autre personne à mobilité réduite et/ou des objets (non représentés).

Comme visible sur les Figures 1 et 2, le véhicule 1 comprend un châssis 7, un fauteuil 9 monté sur le châssis 7, deux roues principales 11 et 13, et deux supports de roue 15 et 17 montés sur le châssis 7. Le véhicule 1 comprend en outre une roue folle 19 montée pivotante à l'arrière du châssis 7, des flotteurs fixes 21, 23 fixés à l'intérieur du châssis 7, et deux flotteurs mobiles 25, 27 montés mobiles sur le châssis 7. Le véhicule 1 comprend encore une barre de poussée 29 fixée à l'arrière du châssis 7.

Optionnellement, le véhicule 1 comprend un ou plusieurs moteurs électriques (non représentés), par exemple fixés sur les supports de roue 15, 17. Les moteurs électriques sont adaptés pour entraîner les roues principale 11, 13 et conférer au véhicule 1 une vitesse maximale de par exemple 5 km/h. Les moteurs électriques minimisent les efforts qu'un opérateur doit exercer pour déplacer le véhicule 1. Les moteurs électriques sont disposés dans un ou des compartiments étanches pour ne pas être détériorés lors d'une utilisation aquatique du véhicule 1.

Le châssis 7 présente par exemple une forme générale en « T ». La tige du « T » est sensiblement orientée selon la direction de mouvement L. La barre du « T » est située du côté de l'avant du véhicule 1. La barre du « T » est orientée sensiblement transversalement.

Le châssis 7 comprend un ou plusieurs logements (non représentés) pour recevoir les flotteurs fixes 21, 23.

En variante (non représentée), le châssis 7 renferme un matériau expansé, léger, imputrescible et étanche, par exemple de la mousse de polyéthylène, qui s'ajoute ou se substitue aux flotteurs fixes 21, 23.

Le châssis 7 comprend en outre deux butées 31, 33 situées respectivement aux deux extrémités transversales de la barre du « T ». La barre « T » comprend deux platines 35, 37 sensiblement parallèles entre elles et s'étendant sensiblement transversalement, sur lesquels sont montés les deux supports de roue 15, 17.

Le châssis 7 comporte avantageusement des points d'élingage (non représentés) du véhicule 1. Les points d'élingage sont par exemple au nombre de trois. Les points d'élingage sont adaptés pour permettre une mise à l'eau du véhicule 1 à l'aide d'un palan ou de tout dispositif équivalent.

Les deux butées 33, 37 s'étendent sensiblement selon la direction de mouvement L et sont fixées sur des bords supérieurs des platines 35, 37.

Le fauteuil 9 est par exemple un fauteuil de poussette. Le fauteuil 9 est fixé sur une face supérieure du châssis 7, par exemple au dessus de la tige du « T ». Le fauteuil 9 comporte avantageusement des sangles 39 pour retenir la personne à mobilité réduite lorsque celle-ci est assise dans le fauteuil 9. Le fauteuil 9 comprend en outre une barre de sécurité 41 destinée à se situer juste devant la personne à mobilité réduite selon la direction de mouvement L et sur laquelle la personne à mobilité réduite peut poser les mains.

La barre de poussée 29 s'étend sensiblement transversalement. Elle est fixée sur le châssis 7 par exemple par deux bras 43, 45. La barre de poussée 29 est par exemple un élément mécano-soudé servant notamment à diriger le véhicule 1.

La roue folle 19 comprend par exemple deux roues 47, 49 de type cycle montées rotatives autour d'un axe D1 commun. La roue folle 19 est montée sur le châssis 7 à l'aide d'une fourche 51 propre à pivoter autour d'un axe de pivotement D2 sensiblement parallèle à la direction d'élévation V.

La fourche 51 est réglable en écartement transversal. La fourche 51 est par exemple du type représenté sur les Figures 15 et 16 de la demande de brevet FR 12 62681.

En variante, la fourche 51 est de tout type décrit dans la demande de brevet précitée.

Le véhicule 1 comprend en outre un dispositif de blocage (non représenté) pour bloquer sélectivement le pivotement de la roue folle 19 autour de l'axe de pivotement D2 dans une position de blocage dans laquelle l'axe D1 est sensiblement transversal.

Chaque roue principale 11, 13 comprend une première roue (non représentée), de type cycle. Chaque roue principale 11, 13 est par exemple du type décrit dans la demande de brevet FR 12 51126. Dans cet exemple, chaque roue principale 11, 13 comprend ainsi une roue additionnelle (non visible), un organe de remplissage (non visible) situé entre la première roue et la roue additionnelle et une bande de roulement 12, 14 enveloppant au moins partiellement la première roue et la roue additionnelle.

Les roues principales 11, 13 sont montés rotatives sur les supports de roue 15, 17 respectivement autour d'axes D3 et D4.

Les supports de roue 15, 17 s'étendent respectivement entre le châssis 7 et les roues principales 11, 13. Les supports de roue 15, 17 sont montés sur les extrémités de la barre du « T » du châssis 7.

Les supports de roue 15, 17 étant sensiblement symétriques l'un de l'autre par rapport à un plan vertical parallèle à la direction de mouvement L et à la direction d'élévation V, seul le support de roue 15 sera décrit ci-après.

Le support de roue 15 comprend deux platines 53, 55 sensiblement parallèles entre elles et sensiblement perpendiculaires à la direction de mouvement L. Le support de roue 15 est mobile en rotation autour d'un axe de pivotement D5 entre une première position relativement au châssis 7, visible sur la Figure 1 et destinée à permettre à la roue principale 11 de rouler sur le sol 3, et une seconde position relativement au châssis 7, visible sur la Figure 2 et dans laquelle la roue principale 11 est plus écartée de la roue principale 13, et avantageusement plus haute selon la direction d'élévation V que dans la première position.

L'axe de pivotement D5 est par exemple sensiblement parallèle à la direction de mouvement L.

Le support de roue 15 est fixé sur le châssis 7 dans la première position (Figure 1) à l'aide de trois dispositifs de blocage 57, 59, 61.

Les dispositifs de blocage 57, 59, 61 bloquent les platines 35, 37 du châssis 7 en sandwich entre les platines 53, 55 du support de roue 15. Les dispositifs de blocage 57, 59, 61 sont par exemple des boulons s'étendant sensiblement selon la direction de mouvement L. Les dispositifs de blocage 57, 59, 61 sont avantageusement constitués d'un écrou et d'une vis à poignée permettant un montage et un démontage rapides.

En variante, les dispositifs de blocage 57, 59, 61 sont d'une autre nature que des boulons.

Dans la première position du support de roue 15 (Figure 1), les dispositifs de blocage 57, 59, 61 définissent respectivement trois points de fixation A, B, C du support de roue 15 sur le châssis 7, en correspondance selon la direction de mouvement L avec trois points de fixation A', B', C' du châssis 7. Par « point de fixation », on entend ici un lieu géométrique ponctuel. La correspondance des points de fixation A, B, C avec le points de fixation A', B', C' sert à définir la position du support de roue 15 par rapport au châssis 7.

Dans la première position du support de roue 15, les axes D3, D4 des roues principales 11, 13 sont sensiblement transversaux.

Les points A, B, C et A', B', C' forment respectivement deux triangles isocèles, avantageusement rectangles, ayant respectivement pour sommets A et A'. Dit autrement, les distances AB et AC sont sensiblement égales et les distances A'B' et A'C' sont sensiblement égales. Les segments AB et AC sont sensiblement perpendiculaires entre eux et les segments A'B' et A'C' sont sensiblement perpendiculaires entre eux. Les segments AB et A'B' sont par exemple sensiblement orientés transversalement.

Les points A et A' sont situés sur l'axe de pivotement D5 du support de roue 15 par rapport au châssis 7.

Comme visible sur la Figure 2, dans la seconde position du support de roue 15, celui-ci est fixé sur châssis 7 uniquement par les dispositifs de blocage 57, 59.

Dans la seconde position (Figure 2), les axes de rotation D3, D4 des roues principales 11, 13 sont sensiblement verticaux. Dans la seconde position, les roues principales 11, 13 sont plus écartées transversalement l'une de l'autre et situées plus haut par rapport au châssis 7 selon la direction d'élévation V qu'elles ne le sont dans la première position (Figure 1).

Dans la seconde position, le dispositif de blocage 57 met en correspondance selon la direction de mouvement L le point de fixation A du support de roue 15 avec le point de fixation A' du châssis 7. Le dispositif de blocage 59 met en correspondance selon la direction de mouvement L le point de fixation B du support de roue 15 avec le point de fixation C' du châssis 7. Dans l'exemple représenté, le dispositif de blocage 61 visible sur la Figure 1 a été retiré et le point de fixation C du support de roue 15 n'est plus utilisé.

Les flotteurs fixes 21, 23 comprennent un matériau expansé, léger, imputrescible et étanche, par exemple de la mousse de polyéthylène.

Les flotteurs mobiles 25, 27 étant sensiblement symétrique l'un de l'autre par rapport au plan de symétrie précité, seul le flotteur mobile 25 sera décrit ci-après.

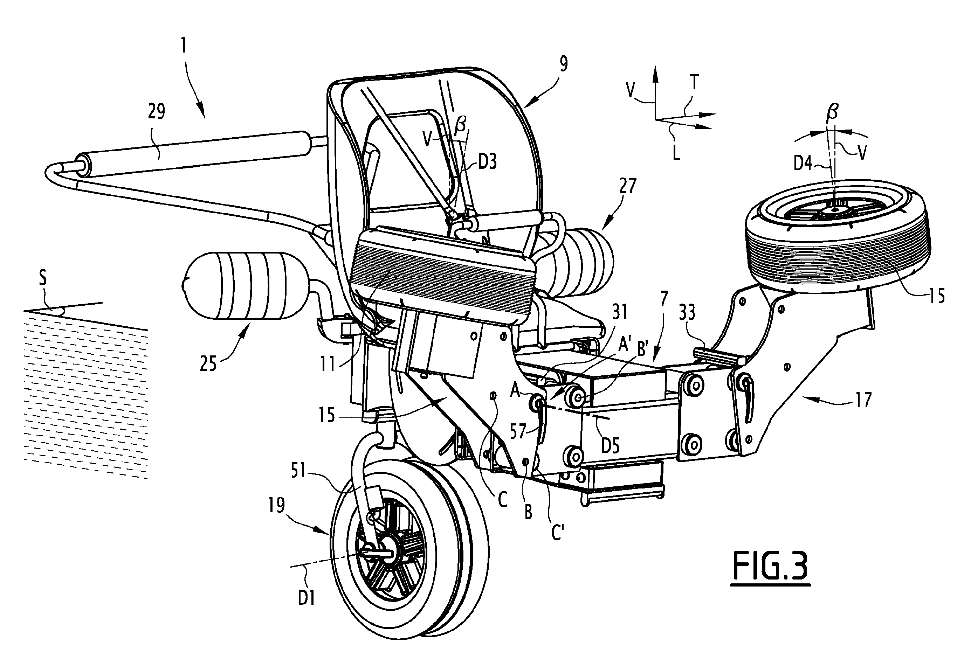

Le flotteur mobile 25 est par exemple monté mobile autour d'un axe qui est, dans l'exemple représenté, sensiblement confondu avec l'axe de pivotement D2. Le flotteur mobile 25 est ainsi mobile entre une position repliée par rapport au châssis 7, représentée sur la Figure 1 et une position dépliée représentée sur les Figures 2 et 3.

Selon un mode de réalisation particulier (non représenté), le flotteur mobile 25 est configuré et monté de telle sorte qu'il se déploie de la position repliée à la position dépliée sous l'action de l'eau du plan d'eau 5

Dans la configuration terrestre, les supports de roue 15, 17 sont dans la première position. Les flotteurs mobiles 25, 27 sont, de préférence, dans la position repliée. La roue folle 19 n'est pas bloquée en rotation autour de son axe de pivotement D2.

Dans la configuration aquatique, les supports de roue 15, 17 sont dans la seconde position. Les flotteurs mobiles 25, 27 sont, de préférence, dans la position dépliée. La roue folle 19 est de préférence bloquée en rotation autour de son axe de pivotement D2.

Le fonctionnement du véhicule 1 va maintenant être décrit.

Le véhicule est par exemple d'abord mis dans sa configuration terrestre (Figure 1). Les supports de roue 15, 17 sont montés dans la première position grâce aux dispositifs de blocage 57, 59, 61. Dans la première position, chacun des dispositifs de blocage 59, 61 empêche la rotation du support de roue 15 dans les deux sens autour de l'axe de pivotement D5.

Les flotteurs mobiles 25, 27 sont mis dans la position repliée. Le dispositif de blocage de la roue folle 19 en rotation autour de son axe de pivotement D2 n'est pas activé.

La personne à mobilité réduite prend place dans le fauteuil 9. Elle est retenue si nécessaire par les sangles 39. Si nécessaire, la personne se tient à la barre de tenue 41.

Le véhicule 1 est alors poussé par un opérateur (non représenté) qui agit sur la barre de poussée 29 pour déplacer le véhicule 1 dans la direction de mouvement L. Grâce à la roue folle 19, il est aisé de modifier la direction de mouvement L.

Les roues principales 11, 13 et la roue folle 19 roulent sur le sol 3. Avantageusement, du fait de leur largeur, les roues principales 11, 13 et la roue folle 19 sont adaptées à des sols meubles, comme par exemple du sable.

Pour une utilisation aquatique, le véhicule est placé dans le plan d'eau 5 (Figure 2). Par exemple, le véhicule 1 étant toujours en configuration terrestre (figure 1), il est poussé dans le plan d'eau. Puis il est mis dans sa configuration aquatique (Figure 2).

Les supports de roue 15, 17 sont placées dans la seconde position. Les flotteurs mobiles 25, 27 sont mis dans la position dépliée. Grâce au dispositif de blocage de la roue folle 19, celle-ci est bloquée dans la position de blocage afin de servir de dérive.

Le véhicule 1, chargée de la personne à mobilité réduite, flotte sur le plan d'eau 5.

Les roues principales 11, 13 émergent en partie du plan d'eau 5. Les roues principales 11, 13 servent de flotteurs au véhicule 1 et contribuent à la stabilité du véhicule 1 par rapport au plan d'eau 5.

Les flotteurs mobiles 25, 27, dans la position dépliée, contribuent également à la flottabilité et à la stabilité du véhicule 1.

Les flotteurs fixes 21, 23 contribuent à la flottabilité du véhicule 1.

Le fonctionnement du support de roue 17 étant analogue à celui du support de roue 15, seul le fonctionnement de ce dernier va être décrit. Pour passer de la première position à la seconde position, le support de roue 15 pivote autour de l'axe de pivotement D5 d'environ 90°. La roue principale 11 passe d'une position sensiblement verticale, dans laquelle l'axe de rotation D3 est sensiblement horizontal, à une position sensiblement horizontale, dans laquelle l'axe D3 est sensiblement vertical.

Pour obtenir le pivotement autour de l'axe de pivotement D5, une solution avantageuse est de desserrer le dispositif 57 de blocage (Figure 1), et de retirer les dispositifs de blocage 59, 61. Le support de roue 15 est alors déplacé vers la seconde position, avantageusement par la force d'Archimède s'exerçant sur la roue principale 11. Lorsque le support de roue 15 est dans la seconde position, le dispositif de blocage 59 est remis en place de façon à immobiliser le support de roue 15 en rotation autour de l'axe de pivotement D5. Par exemple, le dispositif de blocage 59 fixe le point de fixation B du support de roue 15 sur le point de fixation C' du châssis 7. Le dispositif de blocage 57 est alors serré à nouveau.

En variante (non représentée), le support de roue 15 est bloqué non seulement par les dispositifs de blocage 57, 59, mais par en outre au moins un autre dispositif de blocage (non représenté) tel que le dispositif de blocage 61, pour assurer au moins un troisième point de fixation du support de roue 15 sur le châssis 7.

Grâce aux caractéristiques décrites ci-dessus, en particulier les supports de roue 15, 17 mobiles entre la première position et la seconde position, le véhicule 1 est adapté à une utilisation amphibie, et présente une stabilité améliorée lors de l'utilisation aquatique.

En outre, grâce aux roues principales 11, 13, le véhicule 1 est adapté aux sols meubles dans sa configuration terrestre.

Selon une variante non représentée, chaque roue principale 11, 13 comprend un organe gonflable destiné à être gonflé par une action de l'opérateur uniquement lorsque le véhicule 1 est mis dans sa configuration aquatique, et à être dégonflé lorsque le véhicule 1 est dans sa configuration terrestre. Ledit organe renforce la flottabilité de chaque roue principale 11, 13.

Selon une autre variante non représentée, ledit organe gonflable des roues principales 11, 13 est destiné à être gonflé automatiquement grâce à un système pyrotechnique connu en lui-même. C'est le contact du système pyrotechnique avec le plan d'eau 5 qui déclanche le gonflage des roues principales 11, 13.

En référence à la Figure 3, on décrit un véhicule 1 dans une seconde configuration aquatique constituant une variante de la configuration aquatique représentée sur la Figure 2. La seconde configuration aquatique étant globalement analogue à configuration aquatique représentée sur la figure 2, seules les différences seront décrites ci-après.

Dans la seconde configuration aquatique, le support de roue 15 est fixé sur le châssis 7 dans sa seconde position par le dispositif de blocage 57 et par la butée 31. Le support de roue 15 butte contre la butée 31 du fait de l'action de l'eau sur la roue principale 11 qui agit comme un flotteur. La butée 31 empêche la rotation du support de roue 15 dans un sens autour de l'axe de pivotement D5. La seconde position du support de roue 15 est avantageusement définie uniquement par l'axe de pivotement D5 et par la butée 31.

Un avantage de la seconde configuration aquatique est que les supports de roue 15, 17 passent de la première position à la seconde position sous l'action de l'eau du plan d'eau 5, dès lors que la rotation des supports de roue 15, 17 est autorisée autour de l'axe de pivotement D5.

## Revendications

1. Véhicule (1) de type cycle pour le transport d'au moins une personne à mobilité réduite, le véhicule (1) étant destiné à être poussé ou tiré selon une direction de mouvement (L), le véhicule (1) comprenant :
- un châssis (7) ;
- au moins un fauteuil (9) ou une selle monté(e) sur le châssis (7) et sur lequel ou laquelle la personne à mobilité réduite est destinée à s'asseoir ;
- au moins deux roues principales (11, 13) ; et
- au moins deux supports de roue (15, 17) montés sur le châssis (7), les roues principales (11, 13) étant montées rotatives respectivement sur l'un et l'autre des deux supports de roue (15, 17) ;
**caractérisé en ce que** :
- le véhicule (1) est mobile sélectivement entre une configuration terrestre, dans laquelle chaque support de roue (15, 17) occupe une première position relativement au châssis (7) destinée à permettre aux roues principales (11, 13) de rouler sur le sol (3), et une configuration aquatique, dans laquelle le véhicule (1) chargé de la personne à mobilité réduite est destiné à flotter sur un plan d'eau (5) et dans laquelle chaque support de roue (15, 17) occupe une seconde position relativement au châssis (7), les roues principales (11, 13) étant plus écartées l'une de l'autre dans la configuration aquatique que dans la configuration terrestre, et les roues principales (11, 13) étant destinées à être situées plus haut par rapport au châssis (7) dans la configuration aquatique que dans la configuration terrestre ;
- le véhicule (1) présente une masse volumique et un volume tels que le véhicule (1) est capable de flotter sur le plan d'eau (5) en transportant la personne à mobilité réduite, la personne à mobilité réduite ayant une masse inférieure à 120 kg ; et
- les roues principales (11, 13) ont une masse volumique inférieure à celle de l'eau, au moins dans la configuration aquatique du véhicule (1).

2. Véhicule (1) selon la revendication 1, **caractérisé en ce que** :
- dans la configuration terrestre, chaque roue principale (11, 13) est mobile en rotation autour d'un axe (D3, D4) formant un angle inférieur ou égal à 15° avec une direction transversale (T) du véhicule sensiblement perpendiculaire à la direction de mouvement (L) et sensiblement horizontale lorsque le sol (3) est horizontal ; et
- dans la configuration aquatique, l'axe (D3, D4) de chacune des roues principales (11, 13) forme un angle inférieur ou égal à 20° avec une direction d'élévation (V) du véhicule sensiblement perpendiculaire à la direction de mouvement (L) et sensiblement perpendiculaire à la direction transversale (T).

3. Véhicule (1) selon la revendication 1 ou 2, **caractérisé en ce que** la seconde position de chaque support de roue (11, 13) se déduit de la première position par une rotation du support de roue (15, 17) par rapport au châssis (7) respectivement autour d'un axe de pivotement (D5).

4. Véhicule (1) selon la revendication 3, **caractérisé en ce que** le véhicule (1) comprend :
- des dispositifs de montage (57) des supports de roue (15, 17) à rotation sur le châssis (7) respectivement autour des axes de pivotement (D5),
- des dispositifs de blocage (59, 61) pour bloquer les supports de roue (15, 17) dans la première position, lesdits dispositifs de blocage (59, 61) étant propres à s'opposer à une rotation des supports de roue (15, 17) dans les deux sens autour des axes de pivotement (D5), et
- des dispositifs de blocage (59 ; 31) pour bloquer les supports de roue (15, 17) dans la seconde position, lesdits dispositifs de blocage (59 ; 31, 33) étant propres à s'opposer à une rotation des supports de roue (15, 17) autour des axes de pivotement (D5) dans au moins un sens.

5. Véhicule (1) selon la revendication 4, **caractérisé en ce que** les dispositifs de montage (57) et les dispositifs de blocage (59, 61) dans la première position comprennent un écrou et une vis à poignée.

6. Véhicule (1) selon la revendication 4 ou 5, **caractérisé en ce que** les dispositifs de blocage (61) dans la seconde position comprennent un écrou et une vis à poignée.

7. Véhicule (1) selon la revendication 4 ou 5, **caractérisé en ce que** dispositifs de blocage (31, 33) dans la seconde position comprennent une butée solidaire du châssis (7).

8. Véhicule (1) selon l'une quelconque des revendications 1 à 7, **caractérisé en ce que** le véhicule (1) comprend des flotteurs fixes (21, 23) reçus dans des logements du châssis.

9. Véhicule (1) selon l'une quelconque des revendications 1 à 8, **caractérisé en ce que** le véhicule (1) comprend au moins un flotteur mobile (25, 27) monté mobile sur le châssis (7) entre une position repliée par rapport au châssis (7), destinée à être occupée lorsque le véhicule (1) est dans la configuration terrestre, et une position dépliée par rapport au châssis (7), destinée à être occupée lorsque le véhicule (1) est dans la configuration aquatique.

10. Véhicule (1) selon l'une quelconque des revendications 1 à 9, **caractérisé en ce que** le véhicule comprend :
- au moins une roue folle (19) montée pivotante autour d'un axe de pivotement (D2), et
- un dispositif de blocage pour bloquer sélectivement le pivotement de la roue folle (19) autour de l'axe de pivotement (D2) dans une position de blocage dans laquelle la roue folle (19) s'étend sensiblement dans un plan parallèle à la direction de mouvement (L), la roue folle (19) étant destinée à être bloquée dans la position de blocage lorsque le véhicule (1) est dans la configuration aquatique.
